# EUROPÄISCHE PATENTSCHRIFT

(11) **EP 2 002 212 B1**
(45) Veröffentlichungstag und Bekanntmachung des Hinweises auf die Patenterteilung: **26.04.2017**
(21) Anmeldenummer: 07726265.7
(22) Anmeldetag: 30.01.2007
(51) Int. Cl.: G01C 21/36

(54) **VERFAHREN UND ANORDNUNG ZUR ANZEIGE VON NAVIGATIONSHINWEISEN**
METHOD AND SYSTEM FOR DISPLAYING NAVIGATION INSTRUCTIONS
PROCÉDÉ ET SYSTÈME POUR AFFICHER DES INDICATIONS DE NAVIGATION

(30) Priorität: 07.03.2006 DE 102006010478
(43) Veröffentlichungstag der Anmeldung: 17.12.2008
(73) Patentinhaber: Robert Bosch GmbH, 70442 Stuttgart (DE)
(72) Erfinder: MUELLER-FRAHM, Mario, 30519 Hannover (DE)
(86) Internationale Anmeldenummer: PCT/EP2007/050914
(87) Internationale Veröffentlichungsnummer: WO 2007/101755

(56) Entgegenhaltungen:
- EP-A- 1 519 152
- DE-A1- 10 138 719
- JP-A- 9 304 101
- JP-A- 9 325 042
- JP-A- 2004 257 979
- US-B1- 6 285 317

## Beschreibung

### Stand der Technik

Die Erfindung betrifft ein Verfahren zur Anzeige mindestens eines von einem Navigationssystem eines Fahrzeugs gelieferten Navigationshinweises, wobei ein Ausschnitt der Fahrzeugumgebung von einer Kamera aufgenommen und von einer Anzeigeeinheit als Umgebungsbildfolge angezeigt wird, und wobei der in Abhängigkeit einer Fahrzielposition und der aktuellen Position des Fahrzeugs ermittelte Navigationshinweis ebenfalls von der Anzeigeeinheit angezeigt wird. Die Erfindung betrifft ferner eine Anordnung mit der ein derartiges Verfahren durchführbar ist.

Zur Unterstützung der Fahrer von Kraftfahrzeugen ist es bekannt, videobasierte Fahrerassistenzsysteme einzusetzen, die in einem Display von einer Kamera aufgenommene Bilder anzeigen. Auf diese Weise kann der Fahrer zum Beispiel mit einem Rückfahrkamerasystem bei einem rückwärts ausgeführten Einparkvorgang in der Erkennung von Parklückenbegrenzungen oder Hindernissen unterstützt werden. Durch den Einsatz von infrarotempfindlichen Bildsensoren, beispielsweise gemäß der WO 2004/047449 A1, kann der Fahrer im Rahmen sogenannter Nightview-Systeme auch bei schlechten Sichtverhältnissen oder Wetterbedingungen wirkungsvoll unterstützt werden. Auch aus der WO 2003/064213 A1 ist ein "automobiles Infrarot-Nachtsichtgerät" bekannt, das ein aufbereitetes Kamerabild des vor dem Fahrer liegenden Bereichs selektiv anzeigt.

Um den Fahrer bei derartigen Assistenzsystemen noch weiter zu unterstützen ist es ebenfalls bekannt, zusätzliche Informationen zu erzeugen oder abzurufen und diese ergänzend in die von der Bildsensoreinheit aufgenommenen und in der Anzeigeeinheit dargestellten Bilder einzuzeichnen. So können beispielsweise bei einem Nighview-System mit integrierter Fahrspurerkennung die Fahrspur des Fahrzeugs oder bei einem Rückfahrkamerasystem Hilfslinien zur Erleichterung des Einparkvorgangs als zusätzliche Informationen ebenfalls in der Anzeigeeinheit optisch dargestellt werden. Auch können Symbole oder Texte als Zusatzinformationen erzeugt und angezeigt werden. Dabei werden stets künstlich erzeugte graphische Daten gleichzeitig mit den aufgenommenen Bildern der reellen Umgebung des Fahrzeugs in einer Anzeigeeinheit dargestellt. Als Anzeigeeinheit kann vorzugsweise ein Display oder Monitor dienen.

Ein Verfahren der eingangsgenannten Art und eine entsprechende Anordnung ist aus der DE 101 38 719 A1 bekannt. Dabei werden Navigationshinweise in die von einer Fahrzeugkamera aufgenommenen und in der Anzeigeeinheit dargestellten Bilder der Fahrzeugumgebung eingeblendet. Auch wird dort gelehrt, die Fahrzeugneigung in der Längs- und Querachse bei der Anzeigenerstellung zu berücksichtigen.

Weiterhin ist es aus der JP 11023305 A1 bekannt, dass Hindernisse, die etwa in Form von stehenden oder sich bewegenden Objekten, beispielsweise als Fremdfahrzeuge vorliegen können, statt von den eingeblendeten Navigationshinweisen verdeckt, von diesen lediglich transparent überlagert werden.

Ferner stellen auch die JP 09325042 A1 und die JP 2004257979 A1 Verfahren vor, bei denen Navigationshinweise in einer Anzeigeeinheit angezeigt werden, wobei die Distanz von Fahrzeugposition und Zielposition jeweils besonders für die Anzeigenerstellung berücksichtigt wird.

So ist es aus der JP 09325042 A1 beispielsweise bekannt, Navigationspfeile in ein von einer Videokamera aufgenommenes Bild einzublenden, wobei Abbiegepfeile in ihrer Länge an die Entfernung bis zum Abbiegepunkt angepasst werden.

Die JP 2004257979 A1 offenbart, dass Abbiegehinweise dann in ein von einer Kamera aufgenommenes Bild eingeblendet werden, wenn die Entfernung der aktuellen Fahrzeugposition zum Abbiegepunkt kleiner oder gleich einem bestimmten Wert ist.

In Anzeigen eingeblendete Navigationshinweise dienen allgemein dazu, den Fahrer in komplizierten Verkehrssituationen zu entlasten und ihm generell zu einer verbesserten Orientierung zu verhelfen. Besonders deutlich zeigen sich die Vorteile von Navigationshinweisen bei dicht aufeinanderfolgenden Seitenstraßen im schnell fließenden Verkehr.

Die Anzeigeeinheit in Form eines im Navigationsgerät integrierten Displays oder eines separaten meist kleineren im Fahrzeugcockpit angeordneten Displays stellt üblicherweise Navigationshinweise in Form von Pfeilen dar, die statisch angezeigt werden. Navigationshinweise können jedoch auch in anderer Form, beispielsweise als Leitbaken, Warnbaken, Richtungsbaken in Kurven, Begrenzungspfahlsymbole oder als Verkehrzeichen dargestellt werden.

Die der vorliegenden Erfindung zugrundeliegende Problematik besteht allgemein darin, ein Verfahren sowie eine Anordnung vorzuschlagen, das bzw. die dem Fahrer eine besonders realistische Wahrnehmung von in die angezeigte Bildfolge der Fahrzeugumgebung eingeblendeten Navigationshinweisen ermöglicht.

### Offenbarung der Erfindung

Das erfindungsgemäße Verfahren gemäß Anspruch 1 weist gegenüber den bekannten Verfahren und Systemen den Vorteil auf, dass der Fahrer besonders wirkungsvoll unterstützt wird, da die Navigationshinweise derart realitätsnah in die angezeigte Bildfolge der Fahrzeugumgebung eingeblendet werden, dass der Eindruck entsteht, sie wären Bestandteil der aufgenommenen Fahrzeugumgebung. Bei Navigationshinweisen in der Form von Pfeilen kann vorteilhafterweise der Eindruck entstehen, dass sie unmittelbar auf der Fahrbahnoberfläche der vor dem Fahrzeug liegenden Fahrbahn aufgebracht wären. Der vom Fahrer wahrgenommene Informationsgehalt wird dabei gegenüber der tatsächlich aufgenommenen Fahrzeugumgebung um die vom Navigationssystem gelieferten Fahrempfehlungen erhöht ("augmented reality").

Die der vorliegenden Erfindung zugrundeliegende Idee besteht darin, dass bei einer Bewegung des Fahrzeugs die Position des innerhalb der Umgebungsbildfolge eingeblendeten mindestens einen Navigationshinweises in Abhängigkeit von der relativ zum Fahrzeug erfolgenden Bewegung der Umgebung verändert wird. Das bedeutet also, dass der mindestens eine Navigationshinweis innerhalb der Umgebungsbildfolge bewegt wird. Die Navigationshinweise können dabei in vorteilhafter Weise zusammen mit dem Inhalt der angezeigten Umgebungsbildfolge mitbewegt werden. Um einen besonders realitätsnahen Eindruck der Fahrempfehlungen zu erzielen können die Navigationshinweise perspektivisch in der Umgebungsbildfolge angezeigt werden, wobei die Einblendung vorzugsweise im Bereich der vor dem Fahrzeug sich befindenden Fahrbahn erfolgt.

Bei einer entsprechenden Anordnung gemäß des Oberbegriffs von Anspruch 10 ist in entsprechender Weise vorgesehen, dass bei einer Bewegung des Fahrzeugs die von der Anordnung errechnete Position des mindestens einen Navigationshinweises innerhalb der angezeigten Umgebungsbildfolge in Abhängigkeit von der relativ zum Fahrzeug erfolgenden Bewegung der Umgebung veränderbar bzw. der Navigationshinweis bewegbar ist. Bei einem derartigen System kann der oder die Navigationshinweis(e) so verschoben werden, dass ein sehr realitätsnaher Eindruck beim Benutzer des Systems entsteht.

Sowohl durch das erfindungsgemäße Verfahren als auch durch die erfindungsgemäße Anordnung wird außerdem auch ein Sicherheitsgewinn erzielt, da ein Fahrer, der zur Entgegennahme eines Navigationshinweises auf die Anzeigeeinheit schaut, gleichzeitig dem Geschehen auf der Straße vor ihm aufmerksam bleiben kann, wobei die Navigationshinweise nicht als störende Fremdkörper in dem angezeigten Videobild der Fahrzeugumgebung, sondern als Bestandteil der Umgebung wahrgenommen werden. Dieser Gewinn an Sicherheit kann durch eine geeignete Anordnung der Anzeigeeinheit, vorzugsweise möglichst dicht am primären Sichtfeld des Fahrers, noch verstärkt werden, da die sogenannte "eyes-off-the-road-time" dann besonders gering ist. Beinhalten die Navigationshinweise Textinformationen, z.B. Straßennamen oder Entfernungsangaben, so können diese auch in an sich bekannter Weise im unteren Bereich oder Rand der Anzeigeeinheit dargestellt werden, wobei diese Informationen dann nicht bewegt werden müssen. Gleiches gilt für Entfernungsangaben, die in herkömmlicher Weise auch als relative Entfernungsbalken anzeigbar sind.

Vorteilhafte Weiterbildungen und Verbesserungen des erfindungsgemäßen Verfahrens sowie der entsprechenden Anordnung ergeben sich aus den abhängigen Ansprüchen.

So ist es besonders vorteilhaft, wenn der oder die Navigationshinweis(e) bei relativ zum Fahrzeug bewegter Fahrzeugumgebung gleichförmig mit der in der Bildfolge angezeigten

Fahrzeugumgebung bewegt wird bzw. werden. Die gleichförmige Bewegung bewirkt vorteilhafterweise, dass beim Benutzer bzw. Fahrer der Eindruck entsteht, dass der mindestens eine Navigationshinweis zusammen mit der vor dem Fahrzeug liegenden Fahrbahn verschoben wird.

Dabei ist weiterhin günstig, wenn ein Navigationshinweis in der Umgebungsbildfolge auch entsprechend vergrößert oder verkleinert und/oder in seiner Form verändert werden kann. Nicht nur die Bewegung sondern auch die Veränderung der Form und/oder die Vergrößerung oder Verkleinerung des Navigationshinweises kann insbesondere abhängig von der Fahrzeuggeschwindigkeit und der Fahrtrichtung erfolgen. Auf diese Weise wird erreicht, dass die Navigationshinweise vom Benutzer wie reelle Verkehrszeichen bzw. wie auf der Fahrbahn aufgebrachte Richtungspfeile wahrgenommen werden können, ohne dabei allzu sehr in den Vordergrund zu rücken und die Aufmerksamkeit zu stark vom tatsächlichen Geschehen in der aufgenommenen Umgebung abzulenken.

Vorzugsweise wird vorgeschlagen, dass ein Navigationshinweis bei fahrendem Fahrzeug mit mindestens einem Bildpunkt entsprechend mindestens einem Bildpunkt der angezeigten Umgebungsbildfolge auf einen von der Anzeigeeinheit gebildeten Bildrand zubewegt oder davon wegbewegt wird. Insbesondere kann ein Navigationshinweis auch mit mindestens zwei Bildpunkten entsprechend mindestens zweier Bildpunkte der Umgebungsbildfolge bewegt werden, die dabei auch verschiedene Bewegungsrichtungen und/oder Bewegungsgeschwindigkeiten besitzen können.

Besonders vorteilhaft ist es ferner, wenn ein Navigationshinweis bei Erreichen des unteren und/oder eines seitlichen Bildrandes derart dargestellt wird, dass er über den Bildrand hinausgehend aus dem angezeigten Umgebungsbildfolge herausbewegt wird. Durch eine derartig subduzierende Darstellungsweise wird eine besonders realitätsnahe Abbildung erzielt. Vorzugsweise wird bei Erreichen eines vorbestimmten Grenzabstandes zwischen dem Navigationshinweis und dem Bildrand und/oder bei dem Hinausschieben des Navigationshinweises ein weiterer Navigationshinweis in einer insbesondere zentralen Position auf der Anzeigevorrichtung eingeblendet, wobei dieser weitere Fahrhinweis dann erneut auf einen Bildrand zubewegt wird.

Besonders deutlich zeigen sich die Vorteile des erfindungsgemäßen Verfahrens bzw. der Anordnung dann, wenn die Darstellung des mindestens einen Navigationshinweises an den horizontalen und/oder vertikalen Verlauf der vor dem Fahrzeug liegenden Fahrbahn angepasst wird.

Dazu kann insbesondere der mindestens eine Navigationshinweis bei Kurvenfahrt des Fahrzeugs ausgehend von einer Ausgangsposition, die er bei Geradeausfahrt des Fahrzeugs einnehmen würde, verschoben und/oder verdreht, ggf. auch verkleinert oder vergrößert werden, wobei die Positionsänderung des Navigationshinweises vorzugsweise derart erfolgt, dass er stets tangential an der für das Fahrzeug vorherbestimmten Trajektorie liegt.

Ebenso kann der mindestens eine Navigationshinweis bei Fahrt des Fahrzeugs über unebenes Gelände ausgehend von einer Ausgangsposition, die er bei einer Fahrt entlang einer ebenen Strecke einnehmen würde, verschoben und/oder gekippt, ggf. auch verkleinert oder vergrößert werden, wobei die Positionsänderung des Navigationshinweises vorzugsweise derart erfolgt, dass er tangential an dem für das Fahrzeug vorherbestimmten Fahrbahnoberflächenverlauf liegt.

In beiden Fällen ist es ferner besonders vorteilhaft, wenn der Navigationshinweis, etwa ein Richtungspfeil, nicht nur geradlinig entlang einer Tangente, sondern sogar möglichst exakt an den tatsächlichen Verlauf der vor dem Fahrzeug liegenden Fahrbahn angepasst, d.h. gewölbt und/oder gebogen dargestellt wird.

In jedem Fall ist der Eindruck, dass sich die Symbole tatsächlich auf der Fahrbahnoberfläche befinden, umso stärker, je genauer der tatsächliche Fahrbahnverlauf bekannt ist. Das gilt sowohl für den horizontalen Verlauf hinsichtlich Kurven als auch für den vertikalen Verlauf bezüglich des Höhenprofils. Zur Ermittlung des Fahrbahnverlaufs stehen insbesondere folgende drei Möglichkeiten zur Verfugung:
Der Fahrspurverlauf und die Fahrbahnoberfläche können mit Hilfe von Bildverarbeitungsmethoden aus den von der Kamera aufgenommenen Bilddaten bestimmt werden. Beispielsweise können die Fahrbahnmarkierungen detektiert und ihr Verlauf vermessen werden. Typischerweise wird für den horizontalen Verlauf ein Klothoidenmodell angenommen. Der vertikale Verlauf (Höhenprofil) kann ebenfalls aus diesen Daten z.B. gemäß eines quadratischen Modells y(z) = c₀ + c₁z + c₂z² bestimmt werden, wobei y die Höhe und z die Entfernung bezüglich der Kamera ist.

Eine zweite Möglichkeit besteht darin, dass der Fahrspurverlauf und/oder das Straßenprofil aus den digitalen Kartendaten des Navigationssystems entnommen werden. Die aktuelle Position und Höhe des Fahrzeugs sind beispielsweise über GPS, DGPS oder Koppelnavigation ebenfalls sehr genau bekannt. Wenn auch das Höhenprofil zur Zeit zumindest noch nicht vollständig digitalisiert ist, so kann diese Methode jedoch zukünftig eingesetzt werden, sobald Karten über digitalisierten Höhendaten in ausreichendem Maße verfügbar sind. Über die Höheninformation, die dann zu jedem Digitalisierungspunkt der Straße gehört, kann dann durch geeignete Interpolation das Straßenprofil rekonstruiert werden. Ebenso kann der durch Kurven bestimmte horizontale Verlauf der vor dem Fahrzeug liegenden Fahrbahn, insbesondere durch Splines und/oder Kreisbögen und/oder Klothoiden, geeignet interpoliert werden, wozu bereits in ausreichendem Maße digitalisierte Kartendaten vorhanden sind.

Eine dritte Möglichkeit zur Ermittlung des Fahrbahnverlaufs besteht darin, den Fahrbahnverlauf mit Hilfe der im Fahrzeug befindlichen Sensoren zu schätzen. So kann beispielsweise mit Beschleunigungssensoren, vorzugsweise mittels ESP-Sensoren, und/oder mittels des Lenkwinkels und der Fahrzeuggeschwindigkeit die Trajektorie gemäß eines Modells für die Fahrzeugbewegung geschätzt werden.
Besonders vorteilhaft ist es ferner, wenn Navigationshinweise wiederholt entlang des Verlaufs der vor dem Fahrzeug liegenden Fahrbahn dargestellt werden, wobei die Wiederholung insbesondere periodisch erfolgt. Auch können dabei zwei oder mehr Navigationshinweise gleichzeitig sichtbar sein und jeweils in erfindungsgemäßer Art und Weise in der angezeigten Umgebungsbildfolge bewegt werden. Die Bewegung kann dabei für jeden Navigationshinweis unterschiedlich sein, um ein optimales Darstellungsergebnis zu erhalten.

Günstig ist es dabei, wenn der Abstand zwischen zwei Navigationshinweisen derart von der Fahrzeuggeschwindigkeit abhängt, dass der Abstand bei höheren Fahrzeuggeschwindigkeiten größer und bei geringeren Fahrzeuggeschwindigkeiten kleiner ist. Dementsprechend ändert sich dabei auch die Anzahl von eingeblendeten Navigationshinweisen, die bei höheren Fahrzeuggeschwindigkeiten geringer ausfällt als bei langsamerer Fahrt, so dass der Fahrer einen möglichst realistischen Eindruck gewinnt.

Besonders vorteilhaft ist es ferner, wenn bei aufgenommenen, sich relativ zum Fahrzeug und/oder relativ zur Umgebung bewegenden Objekten, die erkannt und in der Umgebungsbildfolge als Objektbild im Bereich eines anzuzeigenden Navigationshinweises derart angezeigt werden, dass es zu einer Überschneidung zwischen dem Objektbild und dem Navigationshinweis kommt, der betroffene Navigationshinweis solange entweder halbtransparent dem Objektbild überlagert angezeigt oder vollständig ausgeblendet wird, bis keine Überschneidung zwischen dem Objektbild und dem Navigationshinweis mehr vorliegt. Auf diese Weise kann ein weiterer Sicherheitsgewinn erzielt werden, da der Fahrer das angezeigte Videobild der Fahrzeugumgebung ohne Verdeckung wesentlicher Objekte erkennen kann.

Dazu werden die Objekte zunächst mittels einer geeigneten Objekterkennungseinrichtung, etwa in Form eines Nah- oder Fernbereichsradars unter Ausnutzung des Doppler-Effektes, erkannt. Andere Sensorik ist bekanntermaßen ebenfalls dazu geeignet. Die Objekterkennungseinrichtung kann auch zur Kamera oder zu anderen Komponenten der Anordnung oder des Navigationssystems gehörende Hardware sein, die mit einer Objekterkennungssoftware ausgestattet ist. Insbesondere kann zur Objekterkennung auch eine Bildauswertung erfolgen. Vorteilhafterweise werden nur solche Objekte erkannt, die verkehrsrelevant sind und sich auf der vor dem Fahrzeug liegenden Fahrbahn befinden, wobei es sich beispielsweise um weitere fahrende oder stehende Fahrzeuge, aber auch um Personen oder Hindernisse handeln kann.

Gemäß einer besonders bevorzugten Ausführungsform der Erfindung ist vorgesehen, dass das Verfahren im Rahmen eines Nachtsichtsystems ausgeführt wird. Dabei kann vorzugsweise die Anzeige von Navigationshinweisen in der Dunkelheit bei Bedarf einem vorhandenen Nachtsichtbild hinzugeschaltet werden. Bei Tageslicht kann die Bildaufbereitung entsprechend angepasst oder abgeschaltet werden. Die Steuerung der Umschaltung kann entweder manuell oder automatisch, beispielsweise mittels eines Lichtsensors und/oder einer Uhr erfolgen.

### Kurze Beschreibung der Zeichnungen

Nachfolgend wird das erfindungsgemäße Verfahren und die Anordnung anhand eines in den Zeichnungen dargestellten Ausführungsbeispiels näher erläutert. Es zeigen
- Figur 1:: ein von einer Anzeigeeinheit dargestelltes Bild der Fahrzeugumgebung mit zwei Navigationshinweisen;
- Figur 2:: ein Aufbauschema einer erfindungsgemäßen Anordnung zur Anzeige von Navigationshinweisen;
- Figur 3:: ein Schema der Positionsverschiebung eines Navigationshinweises bei Kurvenfahrt; und
- Figur 4:: ein Schema der Positionsverschiebung eines Navigationshinweises bei Fahrt über hügeliges Gelände.

### Ausführungsformen der Erfindung

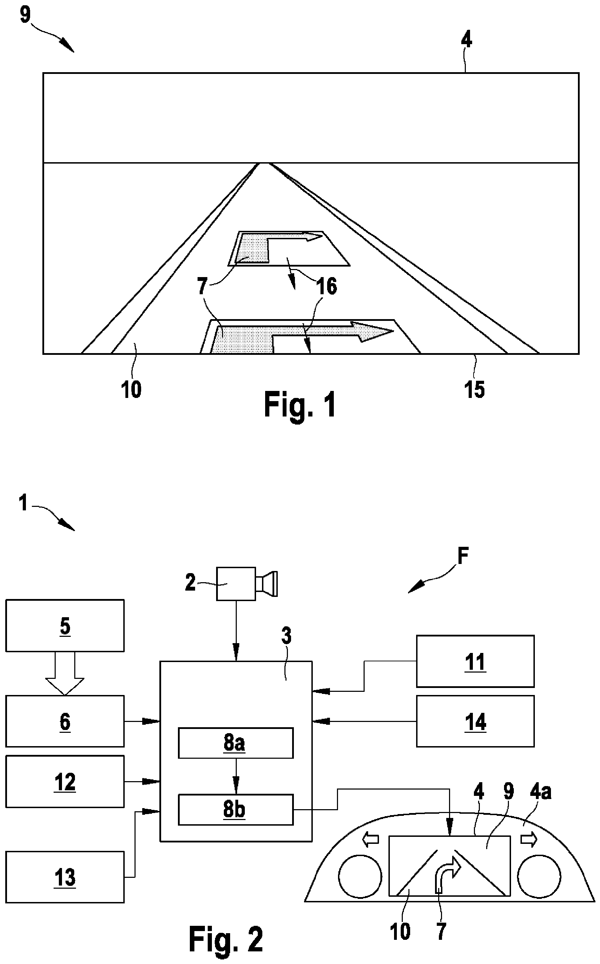

Figur 2 zeigt ein Aufbauschema einer Anordnung 1, mit der das erfindungsgemäße Verfahren bei einem Kraftfahrzeug F zur Anzeige des in Figur 1 dargestellten Bildes ausgeführt werden kann. Das System umfasst eine Videokamera 2, die auch in Form einer Nachtsicht- bzw. IR-Kamera ausgeführt sein kann und die über ein Videosteuergerät 3 mit einer Anzeigeeinheit 4 mit einem an sich bekannten Display verbunden ist. Die Anzeigeeinheit 4 kann insbesondere in Verbindung mit einem Nachtsichtsystem ausgeführt sein. Sie kann an beliebigen Positionen im Fahrzeug F angeordnet sein, wobei sie jedoch vorzugsweise im Bereich des primären Sichtfeldes des Fahrers sich befindet und in ein Kombiinstrument 4a integriert sein kann. Die Anordnung 1 umfasst weiterhin ein Navigationssystem mit einer Navigationseinheit 5, welche in an sich bekannter Weise Fahrempfehlungsdaten 6 erzeugt, die als Navigationshinweise 7 in der Anzeigeeinheit 4 angezeigt werden können. Dazu ist die Navigationseinheit 5 ebenfalls mit dem Videosteuergerät 3 verbunden. Die Verbindungen können vorzugsweise mittels des im Fahrzeugbau inzwischen standardmäßig verwendeten CAN-Busses (CAN = Controller Area Network) oder mittels eines MOST-Busses (MOST = Media Oriented System Transport) oder auch mittels eines anderen seriellen Feldbussystems ausgeführt sein. Die Anordnung 1 ist prinzipiell dazu geeignet, im Fahrzeug F integrierte Navigationssysteme bzw. Nachtsichtsysteme aufzurüsten.

Die Navigationseinheit 5 gibt anhand empfangener Daten, etwa in Form von GPS-Daten, denen Datensätze zur Topografie, Straßenkarten usw. unterlegt sind, Fahrempfehlungsdaten 6 an das Videosteuergerät 3. Zusammen mit den von der Kamera 2 erhaltenen Bilddaten der Fahrzeugumgebung gibt das Videosteuergerät 3 die mittels einer Kalibrierungseinrichtung 8a und eines Renderers 8b aufbereiteten Daten an die Anzeigeeinheit 4 weiter, so dass dort die Umgebungsbildfolge 9 zusammen mit einem oder mit mehreren eingeblendeten Navigationshinweis(en) 7 dargestellt werden kann.

Bevorzugt ist die Anzeige des Navigationshinweises 7, z.B. in Form eines Pfeils, perspektivisch an die Perspektive der Umgebungsbildfolge 9, die von der Anordnung der Kamera 2 am Fahrzeug F abhängt, angepasst. Ein oder mehrere Pfeile 7 werden dabei im Bereich der vor dem Fahrzeug F liegenden Fahrbahn 10 eingeblendet. Dadurch entsteht der Eindruck, die Pfeile 7 wären vor dem Fahrzeug F direkt auf der Fahrbahnoberfläche 10 angeordnet.

Zur Verstärkung dieses Eindrucks kompensiert das Videosteuergerät 3 hier die mit einem Sensor 11 gemessenen Nickbewegungen des Fahrzeugs F in der Umgebungsbildfolge 9. Der Sensor 11 kann ein Nickwinkel- oder Nickratensensor oder ein Beschleunigungssensor, insbesondere aber eine in Figur 2 gezeigte Winkelerfassungseinrichtung in Form eines Sensors 11 zur Ausrichtung der Fahrzeugscheinwerfer sein.

Zur Kompensation des Bildes kann alternativ auch die Fahrbahnoberfläche 10 aus den Bilddaten mittels geeigneter Algorithmen errechnet werden, die ein hier gezeigtes Spurerkennungssystem 12 nutzt, welches ebenfalls mit dem Videosteuergerät 3 verbunden ist. Neben dem Nicken kann selbstverständlich auch das Wanken des Fahrzeugs F kompensiert werden. Im einfachsten Fall kann jedoch aus der statischen Kalibrierung der Kamera 4 eine Straßenoberfläche 10 modelliert werden, ohne das Nicken des Fahrzeugs F zu kompensieren.

Bei der in Figur 2 gezeigten Anordnung 1 werden dem Videosteuergerät 3 weiterhin digitale Kartendaten bzw. Topographiedaten 13 aus einer digitalen Datenbasis zugeführt, aus denen der weitere Streckenverlauf bekannt ist. Dadurch ist eine sehr gute Anpassung der Navigationshinweise 7 an den tatsächlichen Verlauf der Fahrbahn 10 möglich. Außerdem werden dem Videosteuergerät 3 Geschwindigkeitsdaten 14 zur aktuellen Geschwindigkeit des Fahrzeugs F zugeführt, die zur Anpassung der Anzahl und/oder Bewegung und/oder Veränderung der Navigationshinweise 7 verwendet werden.

In Figur 1 ist ein von der Anzeigeeinheit 4 angezeigtes Bild aus einer von der Kamera 2 aufgenommenen Umgebungsbildfolge 9 dargestellt. In diese Umgebungsbildfolge 9 werden auch zwei Navigationshinweise 7 in der Form von Pfeilen eingeblendet, die den Fahrer darauf hinweisen, dass er demnächst rechts abbiegen sollte. Diese beiden Pfeile 7 sind in perspektivischer Darstellung im Bereich der vor dem Fahrzeug F liegenden Fahrbahn 10 eingeblendet und sie bewegen sich mit einer der Fahrtgeschwindigkeit 14 des Fahrzeugs F entsprechenden Geschwindigkeit zusammen mit der Fahrbahn 10 auf den unteren Bildrand 15 zu, wo sie subduzierend dargestellt aus dem Bild hinausgeschoben werden. Die Bewegung der beiden Navigationshinweise 7 ist jeweils durch einen nach unten weisenden kleineren Pfeil 16 angedeutet. Gleichzeitig werden die Navigationshinweise 7 dabei vergrößert. Auf diese Weise entsteht der Eindruck, dass die als Navigationshinweis dienenden Pfeile 7 fest auf der Fahrbahnoberfläche 10 aufgebracht wären und vom Fahrzeug F überrollt werden würden.

Sobald ein Pfeil 7 am unteren Bildrand 15 verschwunden ist, wird etwa im Zentrum des Displays ein neuer Pfeil 7 an einer Position der Anzeigeeinheit 4 eingeblendet, die einer weiter von dem Fahrzeug F entfernt liegenden Stelle der Fahrbahn 10 entspricht. Dieser neue Pfeil 7 wird sodann ebenfalls derart innerhalb der Anzeigeeinheit 4 verschoben, dass wiederum der Eindruck entsteht, der neue Pfeil 7 würde sich ebenfalls mit der Fahrbahnoberfläche 10 auf das Fahrzeug F zu bewegen.

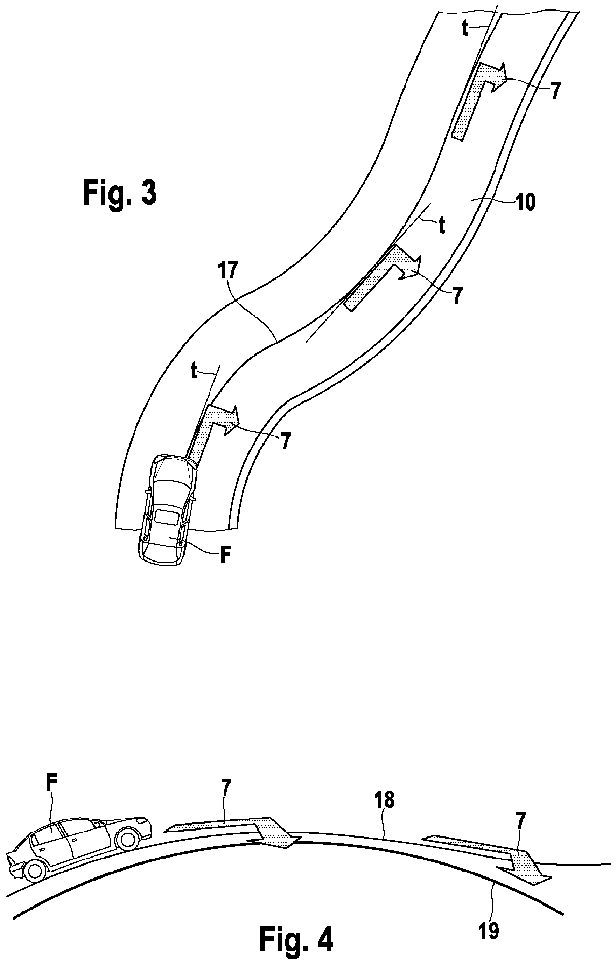

Figur 3 zeigt schematisch, wie mehrere Navigationshinweise 7 an den durch mehrere aufeinander folgende Kurven bestimmten horizontalen Verlauf der vor dem Fahrzeug F liegenden Fahrbahn 10 angepasst werden können. Um zu verhindern, dass bei Kurvenfahrten Navigationshinweise 7 in Form von Pfeilen neben statt auf der Fahrbahn 10 erscheinen, wird der künftige Kursverlauf bzw. die erwartete Trajektorie 17 des Fahrzeugs F und damit die Bewegungsbahn für die Verschiebung der Navigationshinweise 7 in der Anzeigeeinheit 4 abgeschätzt. Dieser Kurs 17 kann zumindest für eine gewisse Strecke auch mit Hilfe von Querbeschleunigungsmessungen oder durch die Messung von Lenkwinkel und Fahrzeuggeschwindigkeit errechnet werden. Ferner ist es möglich, die Trajektorie lediglich aus dem eingeschlagenen Lenkwinkel der Fahrzeuglenkung abzuschätzen. Außerdem können auch die Informationen des vorhandenen Spurerkennungssystems 12 die lagerichtige Anordnung und Verschiebung der Navigationshinweise 7 innerhalb der Fahrbahn 10 sicherstellen.

Jeder Navigationshinweis 7 wird entsprechend des ermittelten Kursverlaufes 17 verdreht und so orientiert, dass der Navigationshinweis 7 stets tangential auf der Tangente t an den vorherbestimmten Kursverlauf 17 des Fahrzeugs F liegt. Der Kursverlauf 17 (Trajektorie) folgt dabei dem Verlauf der Fahrbahn 10.

In Figur 4 ist schematisch eine entsprechende Anpassung der Navigationshinweise 7 an das vor dem Fahrzeug F liegende Höhenprofil 18 dargestellt, welches von dem Verlauf des errechneten Oberflächenmodells 19 abweichen kann. Hier werden die Navigationshinweise 7 in der Anzeigeeinheit nach hinten bzw. nach vorne geklappt, was insbesondere durch eine graphische Streckung oder Stauchung der Navigationshinweise 7 in vertikaler Richtung der Anzeigeeinheit erreicht werden kann. Damit der Fahrer einen möglichst realistischen Eindruck gewinnt, kann die Anpassung der Navigationshinweise gleichzeitig sowohl in horizontaler als auch in vertikaler Richtung erfolgen.

## Patentansprüche

1. Verfahren zur Anzeige mindestens eines Navigationshinweises (7) eines Navigationssystems in einem Fahrzeug (F), wobei ein Ausschnitt der Fahrzeugumgebung von einer Kamera (2) aufgenommen und als Umgebungsbildfolge (9) mittels einer Anzeigeeinheit (4) angezeigt wird, wobei der Navigationshinweis (7) ebenfalls mittels der Anzeigeeinheit (4) angezeigt wird,
**dadurch gekennzeichnet,**
**dass** bei Bewegung des Fahrzeugs (F) die Position des mindestens einen Navigationshinweises (7) innerhalb der Umgebungsbildfolge (9) in Abhängigkeit von der relativ zum Fahrzeug (F) erfolgenden Bewegung der Umgebung verändert und der mindestens eine Navigationshinweis (7) mit der Umgebungsbildfolge (9) mitbewegt (16) wird.

2. Verfahren nach Anspruch 1, **dadurch gekennzeichnet, dass** der mindestens eine Navigationshinweis (7) bei relativ zum Fahrzeug (F) bewegter Fahrzeugumgebung gleichförmig mit der in der Umgebungsbildfolge (9) angezeigten Fahrzeugumgebung bewegt (16) wird.

3. Verfahren nach Anspruch 1 oder 2, **dadurch gekennzeichnet, dass** der mindestens eine Navigationshinweis (7) bei fahrendem Fahrzeug (F) in seiner Größe und/oder Form verändert wird.

4. Verfahren nach mindestens einem der Ansprüche 1 bis 3, **dadurch gekennzeichnet, dass** der Navigationshinweis (7) bei fahrendem Fahrzeug (F) mit mindestens einem Bildpunkt entsprechend mindestens einem Bildpunkt der angezeigten Umgebungsbildfolge (9) auf einen von der Anzeigeeinheit (4) gebildeten Bildrand (15) zubewegt oder davon wegbewegt wird.

5. Verfahren nach mindestens einem der vorherigen Ansprüche, **dadurch gekennzeichnet, dass** ein Navigationshinweis (7) bei Erreichen des unteren und/oder eines seitlichen Bildrandes (15) derart dargestellt wird, dass er aus dem angezeigten Umgebungsbildfolge (9) hinausbewegt wird.

6. Verfahren nach mindestens einem der vorherigen Ansprüche, **dadurch gekennzeichnet, dass** die Darstellung des mindestens einen Navigationshinweises (7) an den horizontalen und/oder vertikalen Verlauf der vor dem Fahrzeug (F) liegenden Fahrbahn (10) angepasst wird.

7. Verfahren nach mindestens einem der vorherigen Ansprüche, **dadurch gekennzeichnet, dass** Navigationshinweise (7) wiederholt entlang des Verlaufs der vor dem Fahrzeug (F) liegenden Fahrbahn (10) dargestellt werden.

8. Verfahren nach Anspruch 7, **dadurch gekennzeichnet, dass** der Abstand zwischen zwei Navigationshinweisen (7) derart von der Fahrzeuggeschwindigkeit (14) abhängt, dass der Abstand umso größer ist, je höher die Fahrzeuggeschwindigkeit (14) ist.

9. Verfahren nach mindestens einem der vorherigen Ansprüche, **dadurch gekennzeichnet, dass** bei aufgenommenen, sich relativ zum Fahrzeug (F) und/oder relativ zur Umgebung bewegenden Objekten, die erkannt und in der Umgebungsbildfolge (9) als Objektbild im Bereich eines anzuzeigenden Navigationshinweises (7) derart angezeigt werden, dass es zu einer Überschneidung zwischen dem Objektbild und dem Navigationshinweis (7) kommt, der betroffene Navigationshinweis (7) solange entweder halbtransparent dem Objektbild überlagert angezeigt oder vollständig ausgeblendet wird, bis keine Überschneidung zwischen dem Objektbild und dem Navigationshinweis (7) mehr vorliegt.

10. Anordnung (1) zur Anzeige mindestens eines Navigationshinweises (7) eines Navigationssystems für ein Fahrzeug (F), umfassend eine Kamera (2), die so angeordnet ist, dass sie einen Ausschnitt der Fahrzeugumgebung aufnimmt, eine Navigationseinheit (5) und eine Anzeigeeinheit (4), die so eingerichtet ist, dass sie sowohl den mindestens einen Navigationshinweis (7) als auch einen aufgenommenen Ausschnitt der Fahrzeugumgebung als Umgebungsbildfolge (9) darstellt, **dadurch gekennzeichnet,**
**dass** die Anzeigeeinheit (4) so eingerichtet ist, dass bei einer Bewegung des Fahrzeugs (F) der mindestens eine Navigationshinweis (7) innerhalb der Umgebungsbildfolge (9) in Abhängigkeit von der relativ zum Fahrzeug (F) erfolgenden Bewegung der Umgebung in seiner von der Anordnung (1) errechneten Position verändert wird und mit der Umgebungsbildfolge (9) mitbewegt (16) wird.

## Claims

1. Method for displaying at least one navigation indication (7) from a navigation system in a vehicle (F), wherein a detail from the vehicle surroundings is recorded by a camera (2) and displayed as a surroundings image sequence (9) by means of a display unit (4), the navigation indication (7) likewise being displayed by means of the display unit (4),
**characterized**
**in that** when the vehicle (F) is moving, the positon of the at least one navigation indication (7) is altered within the surroundings image sequence (9) on the basis of the movement of the surroundings taking place relative to the vehicle (F) and the at least one navigation indication (7) is moved along (16) with the surroundings image sequence (9).

2. Method according to Claim 1, **characterized in that** the at least one navigation indication (7) is moved (16) uniformly with the vehicle surroundings displayed in the surroundings image sequence (9) when the vehicle surroundings are moving relative to the vehicle (F).

3. Method according to Claim 1 or 2, **characterized in that** the at least one navigation indication (7) has its size and/or shape altered when the vehicle (F) is travelling.

4. Method according to at least one of Claims 1 to 3,
**characterized in that** the navigation indication (7) has at least one image point moved towards or moved away from an image edge (15), formed by the display unit (4), in accordance with at least one image point of the displayed surroundings image sequence (9) when the vehicle (F) is travelling.

5. Method according to at least one of the preceding claims, **characterized in that** a navigation indication (7), on reaching the lower and/or a lateral image edge (15), is presented such that it is moved out of the displayed surroundings image sequence (9).

6. Method according to at least one of the preceding claims, **characterized in that** the presentation of the at least one navigation indication (7) is matched to the horizontal and/or vertical profile of the roadway (10) situated ahead of the vehicle (F).

7. Method according to at least one of the preceding claims, **characterized in that** navigation indications (7) are presented repeatedly along the profile of the roadway (10) situated ahead of the vehicle (F).

8. Method according to Claim 7, **characterized in that** the distance between two navigation indications (7) is dependent on the vehicle speed (14) such that the distance is greater the higher the vehicle speed (14).

9. Method according to at least one of the preceding claims, **characterized in that** recorded objects moving relative to the vehicle (F) and/or relative to the surroundings and identified and displayed in the surroundings image sequence (9) as an object image in the region of a navigation indication (7) to be displayed such that there is an overlap between the object image and the navigation indication (7) prompt the relevant navigation indication (7) to be either displayed in a manner overlaid semitransparently on the object image or completely hidden until there is no longer an overlap between the object image and the navigation indication (7).

10. Arrangement (1) for displaying at least one navigation indication (7) from a navigation system for a vehicle (F), comprising a camera (2) that is arranged such that it records a detail from the vehicle surroundings, a navigation unit (5) and a display unit (4) that is set up such that it presents both the at least one navigation indication (7) and a recorded detail from the vehicle surroundings as a surroundings image sequence (9),
**characterized**
**in that** the display unit (4) is set up such that when the vehicle (F) is moving, the at least one navigation indication (7) has its position, as computed by the arrangement (1), altered within the surroundings image sequence (9) on the basis of the movement of the surroundings taking place relative to the vehicle (F) and is moved along (16) with the surroundings image sequence (9).

## Revendications

1. Procédé pour afficher au moins une consigne de navigation (7) d'un système de navigation dans un véhicule (F), une portion de l'environnement du véhicule étant enregistrée par une caméra (2) et affichée sous la forme d'une séquence d'images d'environnement (9) au moyen d'une unité d'affichage (4), la consigne de navigation (7) étant également affichée au moyen de l'unité d'affichage (4), **caractérisé en ce**
**que** lors du déplacement du véhicule (F), la position de l'au moins une consigne de navigation (7) à l'intérieur de la séquence d'images d'environnement (9) est modifiée en fonction du mouvement de l'environnement qui a lieu par rapport au véhicule (F) et l'au moins une consigne de navigation (7) accompagne (16) le mouvement de la séquence d'images d'environnement (9).

2. Procédé selon la revendication 1, **caractérisé en ce que** l'au moins une consigne de navigation (7), dans le cas d'un environnement du véhicule qui se déplace par rapport au véhicule (F), est déplacée (16) uniformément avec l'environnement de véhicule affiché dans la séquence d'images d'environnement (9).

3. Procédé selon la revendication 1 ou 2, **caractérisé en ce que** la taille et/ou la forme de l'au moins une consigne de navigation (7) sont modifiées lors du déplacement du véhicule (F).

4. Procédé selon au moins l'une des revendications 1 à 3, **caractérisé en ce que** lors du déplacement du véhicule (F), la consigne de navigation (7) est approchée d'un bord d'image (15) formé par l'unité d'affichage (4) d'au moins un pixel correspondant à au moins un pixel de la séquence d'images d'environnement (9) affichée, ou en est éloignée.

5. Procédé selon au moins l'une des revendications précédentes, **caractérisé en ce que** lorsque le bord d'image (15) inférieur et/ou un latéral est atteint, une consigne de navigation (7) est affichée de telle sorte qu'elle est déplacée hors de la séquence d'images d'environnement (9) affichée.

6. Procédé selon au moins l'une des revendications précédentes, **caractérisé en ce que** la représentation de l'au moins une consigne de navigation (7) est adaptée au défilement horizontal et/ou vertical de la voie de circulation (10) qui se trouve devant le véhicule (F).

7. Procédé selon au moins l'une des revendications précédentes, **caractérisé en ce que** des consignes de navigation (7) sont affichées de manière répétée le long du défilement de la voie de circulation (10) qui se trouve devant le véhicule (F).

8. Procédé selon la revendication 7, **caractérisé en ce que** l'écart entre deux consignes de navigation (7) dépend de la vitesse du véhicule (14) de telle sorte que l'écart est d'autant plus grand que la vitesse du véhicule (14) est élevée.

9. Procédé selon au moins l'une des revendications précédentes, **caractérisé en ce qu'**en présence d'objets enregistrés qui se déplacent par rapport au véhicule (F) et/ou par rapport à l'environnement, lesquels sont reconnus et affichés dans la séquence d'images d'environnement (9) sous la forme d'image d'objet dans la zone d'une consigne de navigation (7) à afficher de telle sorte qu'il se produit un recoupement entre l'image d'objet et la consigne de navigation (7), la consigne de navigation (7) concernée est soit affichée en semi-transparence superposée à l'image d'objet, soit totalement masquée, jusqu'à ce qu'il n'existe plus de recoupement entre l'image d'objet et la consigne de navigation (7).

10. Arrangement (1) pour afficher au moins une consigne de navigation (7) d'un système de navigation pour un véhicule (F), comprenant une caméra (2) qui est disposée de telle sorte qu'elle enregistre une portion de l'environnement du véhicule, une unité de navigation (5) et une unité d'affichage (4), laquelle est conçue de telle sorte qu'elle représente à la fois l'au moins une consigne de navigation (7) ainsi qu'une portion enregistrée de l'environnement du véhicule sous la forme d'une séquence d'images d'environnement (9), **caractérisé en ce**
**que** l'unité d'affichage (4) est conçue de telle sorte que lors d'un déplacement du véhicule (F), la position calculée par l'arrangement (1) de l'au moins une consigne de navigation (7) à l'intérieur de la séquence d'images d'environnement (9) est modifiée en fonction du mouvement de l'environnement qui a lieu par rapport au véhicule (F) et accompagne (16) le mouvement de la séquence d'images d'environnement (9).
